# Europäisches Patentamt
# European Patent Office
# Office européen des brevets

(19)

(11) Numéro de publication: **0 187 564**
**B1**

(12)

# FASCICULE DE BREVET EUROPÉEN

(45) Date de publication du fascicule du brevet:
25.01.89

(51) Int. Cl.⁴: **B 01 D 17/022**, C 10 G 33/06

(21) Numéro de dépôt: **85402307.4**

(22) Date de dépôt: **26.11.85**

(54) **Séparateur de liquides non miscibles utilisant un milieu coalescent.**

(30) Priorité: **27.11.84 FR 8418031**

(43) Date de publication de la demande:
**16.07.86 Bulletin 86/29**

(45) Mention de la délivrance du brevet:
**25.01.89 Bulletin 89/4**

(84) Etats contractants désignés:
**DE GB IT**

(56) Documents cité:
**DE-A-2 645 634**
**FR-A-1 326 746**
**FR-A-2 138 989**
**FR-A-2 249 698**
**FR-A-2 319 400**
**GB-A-892 663**

(73) Titulaire: **SOFRANCE S.A., Z.I. des Gannes B.P. 3,
F-87800 Nexon (FR)**

(72) Inventeur: **Pariset, Jean, 87, rue Croix Verte,
F-87000 Limoges (FR)**

(74) Mandataire: **Schrimpf, Robert, Cabinet Regimbeau
26, Avenue Kléber, F-75116 Paris (FR)**

EP 0 187 564 B1

## Description

La présente invention concerne la séparation de l'eau constituant une phase dispersée à l'état de gouttelettes dans un hydrocarbure ou un mélange d'hydrocarbures, au moyen d'un milieu favorisant la coalescence des gouttes de la phase dispersée.

Des opérations de ce type sont réalisées par exemple (mais non exclusivement) pour éliminer l'eau qui se trouve en émulsion dans les carburants liquides tels que le kérosène. Les séparateurs utilisés à cette fin ont généralement la forme d'une cartouche cylindrique qui comprend un milieu coalescent constitué de plusieurs couches concentriques de matériaux fibreux, que le carburant à traiter traverse de l'intérieur vers l'extérieur de la cartouche. Les gouttes d'eau extraites du carburant par coalescence s'accumulent sur la paroi externe de la cartouche, d'où elles sont éliminées par gravité.

La présente invention se propose de réaliser un séparateur du genre mentionné plus haut qui soit très performant tout en étant de construction simple et peu coûteuse, cette construction ne faisant appel qu'à des composants facilement disponibles sur le marché.

Ce résultat est obtenu, dans le milieu coalescent conforme à l'invention, par la juxtaposition, dans le sens de progression des liquides à traiter, d'une ou de plusieurs première(s) couche(s) d'un mélange homogène de fibres de silice et d'alumine, dont le diamètre des fibres est hétérogène et compris entre 0,5 et 10 micromètres, d'une deuxième couche de mousse à cellules ouvertes, peu ou non mouillable par l'eau dont la taille des pores est comprise entre 0,05 et 0,2 millimètres, d'une troisième couche homogène de fibres de verre dont le diamètre des fibres est hétérogène et compris entre 20 et 200 micromètres et d'une quatrième couche en forme de tricot en matière cellulosique tissée, dont la taille des pores est comprise entre 2 et 10 millimètres.

L'expérience a montré que cette structure permet d'obtenir une séparation efficace et rapide des liquides traités.

Le pourcentage en poids de silice constituant la (ou les) première(s) couche(s) est avantageusement compris entre 45 et 65 % du poids total de la (ou des) dite(s) première(s) couche(s).

La mousse constituant la seconde couche est avantageusement une mousse de polyester. Au cours de la fabrication du séparateur, il peut être intéressant de comprimer la (ou les) première(s) et deuxième couches afin que celles-ci présentent les qualités de densité et de porosité optimales correspondant à la nature des liquides à traiter; dans ce cas il est avantageux de prévoir une armature en polychlorure de vinyle armé apte à maintenir des deux couches à l'état comprimé après fabrication.

En amont du milieu coalesceur, il est préférable de prévoir un filtre constitué par une couche de fibres de verre, dont le diamètre des fibres est compris entre 2 et 100 micromètres. Le rôle de ce filtre, qui est avantageusement protégé par un papier imprégné de résine phénolique, est d'arrêter les particules solides vehiculées par les liquides à traiter et de réaliser déjà un début de coalescence des gouttes à éliminer.

Selon une forme de réalisation préférentielle de l'invention, le séparateur est une cartouche cylindrique qui comprend une armature en forme de tube perforé sur lequel est enroulé le milieu coalescent et à l'intérieur duquel est logé le filtre. Le tube perforé est alors avantageusement revêtu d'une résine de type époxy, qui lui confère une bonne résistance à la corrosion.

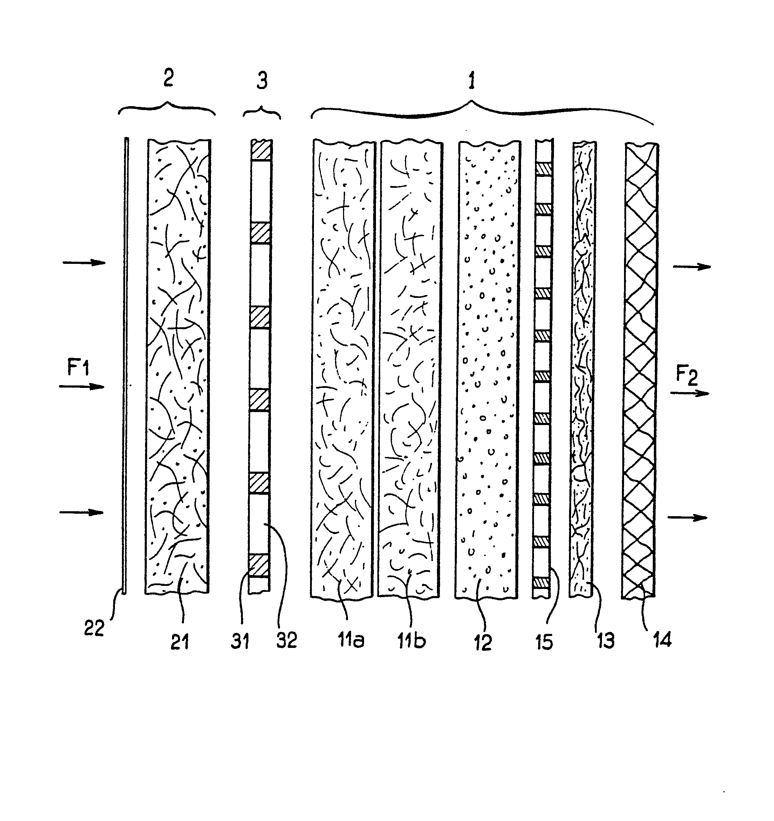

D'autres caractéristiques et avantages de l'invention apparaîtront de la description et du dessin annexé qui en présentent un mode de réalisation préférentiel.

La figure unique annexée illustre, de manière schématique, un séparateur conforme à la présente invention. Celui-ci comprend trois parties principales: le milieu coalescent 1, le filtre 2 et l'armature 3. Chacun des éléments qui constitue le séparateur se trouve en contact intime avec le (ou les) élément(s) voisin(s); toutefois, ils ont été séparés les uns des autres sur la figure annexée dans le simple but de faciliter la lecture de celle-ci. Les flèches F1 et F2 indiquent le sens de progression des liquides, F1 désignant l'arrivée des liquides à traiter et F2 la sortie du liquide épuré.

Le milieu coalescent 1, qui constitue la partie essentielle de l'invention, comprend, d'amont en aval, les couches successives suivantes:

- deux couches d'un feutre de fibres fines de silice et d'alumine mélangées, désignées par les références 11a, 11b;
- une couche de matériau en mousse à cellules ouvertes, désignée par la référence 12;
- une grille de compression 15;
- un mat de fibres de verre grossier 13;
- un tricot en matière cellulosique tissée, désigné par la référence 14.

Le rôle de ce milieu 1 est d'accrocher par effet de surface toutes les gouttes de l'eau à éliminer, quelles que soient leurs tailles et leur permettre de grossir au cours de leur progression à travers le milieu.

Les couches 11a, 11b, identiques, sont un mélange fibreux homogène de silice et d'alumine, avec un diamètre de fibres hétérogène, situé dans la gamme de 0,5 a 10 micromètres et, de préférence, de 1 à 5 micromètres. Le pourcentage en poids du silice est compris entre 45 et 65 %, la composition pondérale optimale du mélange étant de 55 % de silice pour 45 % d'alumine. L'épaisseur totale des couches 11a, 11b est de l'ordre de 6 mm et leur densité est de 0,2 kg/l.

La juxtaposition de deux couches distinctes 11a, 11b permet d'éviter le risque que, par suite d'une irrégularité locale d'épaisseur de l'une des couches, le phénomène de coalescence soit empêché ou perturbé en certaines zones de passage des liquides, la présence de deux couches analogues en vis-à-vis l'une de l'autre constituant un facteur de sécurité sur le plan de l'homogénéité du milieu.

La couche 12 est une mousse de polyester dont taille des pores est comprise entre 0,05 et 0,2 millimètre et, de préférence de l'ordre de 0,1 mm. Son épaisseur est de 3 mm environ.

Il est possible de réaliser les couches 11a, 11b ainsi que la couche 12 à partir de matériaux disponibles dans le commerce, que l'on comprime au cours de la fabrication du séparateur de manière à obtenir pour la première la densité optimale souhaitée et pour la seconde la porosité optimale souhaitée; c'est ainsi que les couches 11a, 11b de densité 0,2 kg/l sont obtenues par compression à 1 kg/cm$^2$ d'une nappe de 12,7 mm d'épaisseur, tandis que la couche 12 de porosité 0,1 mm est obtenue après compression équivalente d'une mousse de polyester de porosité initiale 0,3 mm.

Pour maintenir les couches 11a, 11b et 12 à l'état comprimé, on peut utiliser une grille en polychlorure de vinyle qui les applique fortement contre l'armature 3 par tout moyen approprié tel que des tirants. Cette grille est désignée par la référence 15 sur la figure.

On notera que le matériau situé en amont du milieu coalescent, en l'occurrence les couches fibreuses 11a, 11b est un matériau très mouillable par la phase dispersée, c'est-à-dire par l'eau à éliminer. Au contraire le matériau de la couche 12 (mousse de polyester) qui lui est adjacent est peu ou non mouillable par l'eau. L'intérêt de cet arrangement sera expliqué plus loin, au cours de la description du fonctionnement du séparateur.

La couche suivante 13 est un mat homogène de fibres de verre dont le diamètre est hétérogène et compris entre 20 et 200 micromètres et, de préférence, entre 40 et 100 micromètres. Son épaisseur est de 1 mm environ. Il s'agit d'un matériau mouillable.

La dernière couche 14 est un tricot tissé présentant des côtes (type jersey double) et réalisé dans un matériau cellulosique à porosité élevée et à mouillabilité équilibrée, en l'occurrence des fibres de lin longues (20 à 30 millimètres). La taille des pores de cette couche est comprise entre 2 et 10 millimètres et est de préférence de l'ordre de 5 a 6 millimètres. Son épaisseur est de l'ordre de 1 à 2 mm.

Le filtre 2 situé en amont du milieu coalescent 1 comprend une couche 21 en feutre homogène de fibres de verre dont le diamètre est hétérogène et compris entre 2 et 100 micromètres et, de préférence, entre 5 et 50 micromètres. Son épaisseur est de 3 mm.

Ce milieu est protégé du côté amont par une feuille 22 en papier imprégné de résine type phénolique, cette dernière étant nécessaire pour désensibiliser le papier en présence d'eau.

Entre le filtre 2 et le milieu coalescent 1 est disposée l'armature 3 dont la fonction est simplement de donner au séparateur sa forme et sa rigidité; il s'agit d'une grille 31 en matériau mécaniquement résistant, présentant des perforations 32 destinées à ne pas contrarier la progression des liquides traités dans le séparateur. Cette grille est avantageusement recouverte d'un revêtement en résine de type époxy qui lui confère une bonne résistance chimique vis-à-vis des fluides corrosifs.

Le fonctionnement du séparateur va maintenant être décrit en considérant que les liquides à traiter sont constitués par un carburant du type kérosène contenant de fines gouttelettes d'eau en suspension de diamètre moyen de 3 à 5 micromètre, ainsi que des particules solides qui présentent des répartitions granulométriques très variées et dont la nature est essentiellement à base d'oxyde de fer.

Le filtre 2 retient les particules solides qui se présentent. Les très fines particules (de dimensions inférieures à 0,5 micromètre), qui seraient dangereuse pour le milieu coalescent, étant fixées par un phénomène d'absorption dans la fibre de verre. En même temps se réalise un début de coalescence des gouttelettes d'eau véhiculées par le carburant. Lorsque celui-ci traverse les couches suivantes 11a, 11b de fibres de silice et d'alumine, commence véritablement le processus de coalescence, les gouttelettes d'eau étant accrochées et regroupées par le milieu fibreux au cours de leur trajet; le diamètre moyen des gouttelettes d'eau est de l'ordre de 1 mm à la sortie des couches 11a, 11b.

La couche 12 de mousse de polyester, que le carburant traverse ensuite, a pour rôle de ralentir les gouttelettes d'eau issues des couches précédentes et de les retenir un certain temps de manière à prolonger le temps de contact des gouttelettes entre elles et de favoriser leur croissance A la sortie de la couche 12, les gouttes ont un diamètre moyen de 5 mm environ, avec toutefois une proportion élevée de gouttes de diamètre sensiblement inférieur, de l'ordre de 2 à 3 mm. Le rôle principal du mat de fibres de verre 13 qui suit est justement d'accrocher et de faire grossir ces gouttes plus petites pour que le diamètre moyen de l'ensemble des gouttes soit de l'ordre de 5 mm.

Enfin, le tricot de fibres de lin 14 effectue un calibrage des gouttes, les gouttes produites présentant toutes un diamètre correspondant aux côtes du tricot, c'est-à-dire 5 à 6 millimètres pour la porosité qui est choisie préférentiellement pour ce tricot. Ces gouttes s'accumulent sur la face aval du tricot 14, d'où elles sont éliminées par gravité, tandis que le carburant épuré s'écoule selon F2.

Dans un mode de réalisation préférentiel du séparateur les couches successives 11a, 11n, 12, 13 et 14 sont des couches cylindriques concentriques enroulées sur une armature tubulaire 3. Le filtre a alors la forme d'un tube à paroi plissée, qui est logé à l'intérieur de l'armature 3. Dans cette hypothèse les flèches F1 de la figure sont situées à l'intérieur et les flèches F2 à l'extérieur du séparateur.

Au cours de la fabrication d'un séparateur de ce type, la compression des couches 11a, 11b et 12 qui a été mentionnée plus haut est réalisée par traction contrôlée sur ces couches durant leur enroulement autour de l'armature 3. Ces couches sont ensuite maintenues à l'état comprimé au moyen d'une grille de polychlorure de vinyle thermosoudée.

## Revendications

1. Séparateur pour la séparation de l'eau constituant une phase dispersée à l'état de gouttelettes dans un hydrocarbure liquide ou mélange d'hydrocarbures, notamment dans un carburant constituant une phase continue, ce séparateur comportant un milieu apte à favoriser la coalescence de la phase dispersée, et ce milieu (1) étant constitué par la juxtaposition, dans le sens de déplacement des liquides,
 - d'une ou plusieurs première(s) couche(s) (11a, 11b) d'un mélange homogène de fibres de silice et d'alumine, le diamètre de ces fibres étant hétérogène et compris entre 0,5 et 10 micromètres,
 - d'une deuxième couche de mousse à cellules ouvertes (12) peu on non mouillable par l'eau dont la taille des pores est comprise entre 0,05 et 0,2 millimètre,
 - d'une troisième couche homogène de fibres de verre (13), le diamètre de ces fibres étant hétérogène et compris entre 20 et 200 micromètres,
 - d'un tricot en matière cellulosique tissée (14) dont la taille des pores est comprise entre 2 et 10 millimètres.

2. Séparateur selon la revendication 1, caractérisé en ce que la proportion en poids du silice constituant la (ou les) première(s) couche(s) (11a, 11b) est compris entre 45 et 65 % du poids total de la (ou des) dite(s) première(s) couche(s).

3. Séparateur selon l'une des revendicaticns 1 ou 2, caractérisé en ce que la mousse constituant la deuxième couche (12) est une mousse de polyester.

4. Séparateur selon l'une des revendications 1 à 3, caractérisé en ce que la (ou les) première(s) couche(s) de fibres de silice et d'alumine (11a, 11b) sont à l'état comprimé.

5. Séparateur selon l'une des revendications 1 à 4, caractérisé en ce que la couche de mousse (12) est à l'état comprimé.

6. Séparateur selon les revendications 4 et 5 prises en combinaison, caractérisé en ce que la ou les première(s) couche(s) (11a, 11b) et la deuxième couche (12) sont maintenues à l'état comprimé au moyen d'une grille en polychlorure de vinyle (15).

7. Séparateur selon l'une des revendications 1 à 6, caractérisé en ce qu'il comporte un filtre (2) qui, dans le sens du déplacement des liquides, est disposé en amont des dites première(s) couches (11a), (11b), (12), (13), et dudit tricot (14) et comprend une couche homogène de fibres de verre (21), le diamètre de ces fibres étant hétérogène et compris entre 2 et 100 micromètres.

8. Séparateur selon revendication 7, caractérisé en ce que la couche de fibres de verre (21) du filtre (2) est revêtue d'une feuille de papier imprégné de résine phénolique (22).

9. Séparateur selon l'une des revendications 1 à 8, caractérisé en ce qu'elle comporte une armature en forme de grille perforée (3) revêtue de résine époxy.

10. Séparateur selon l'une des revendications 1 à 6 prise en combinaison avec l'une des revendications 7 ou 8 et prise en combinaison avec la revendication 9, caractérisé en ce qu'il affecte la forme d'une cartouche cylindrique qui comprend une armature tubulaire (3) sur laquelle sont enroulées concentriquement les première(s), deuxième et troisième couches (11a, 11b), (12), (13), et le tricot (14) constituant le milieu coalescent et à l'intérieur de laquelle est logé le filtre (2).

## Patentansprüche

1. Separator zum Abtrennen von Wasser, das in einem Kohlenwasserstoff oder einem Kohlenwasserstoffgemisch, insbesondere in einem Treibstoff, der bzw. das eine kontinuierliche Phase bildet, eine disperse Phase in Form von Tröpfchen bildet, wobei dieser Separator ein Mittel aufweist, das in der Lage ist, die Koaleszenz der dispersen Phase zu begünstigen, und dieses Mittel (1) gebildet wird durch die Juxtaposition, in Bewegungsrichtung der Flüssigkeiten,
 - von einer oder mehreren ersten Lage(n) (11a, 11b) aus einem homogenen Gemisch von Silika- und Aluminiumoxidfasern, wobei der Durchmesser dieser Fasern uneinheitlich ist und zwischen 0,5 und 10 μm liegt,
 - von einer zweiten Lage aus offenzelligem Schaum (12), der wenig oder gar nicht von Wasser benetzbar ist und dessen Porengröße zwischen 0,05 und 0,2 mm liegt,
 - von einer dritten, homogenen Lage aus Glasfasern (13), wobei der Durchmesser dieser Fasern uneinheitlich ist und zwischen 20 und 200 μm liegt,
 - von einem Gewebe aus gewebtem Cellulosematerial (14), dessen Porengröße zwischen 2 und 10 mm liegt.

2. Separator nach Anspruch 1, dadurch gekennzeichnet, daß der Gewichtsanteil von Silika in der (oder den) ersten Lage(n) (11a, 11b) zwischen 45 und 65 % des Gesamtgewichtes der besagten ersten Lage(n) liegt.

3. Separator nach einem der Ansprüche 1 oder 2, dadurch gekennzeichnet, daß der Schaum, der die zweite Lage (12) bildet, ein Polyesterschaum ist.

4. Separator nach einem der Ansprüche 1 bis 3, dadurch gekennzeichnet, daß die erste(n) Lage(n) aus Silika- und Aluminiumoxidfasern (11a, 11b) in gepreßtem Zustand ist (sind).

5. Separator nach einem der Ansprüche 1 bis 4, dadurch gekennzeichnet, daß die Schaumlage (12) in gepreßtem Zustand ist.

6. Separator nach den Ansprüchen 4 und 5 in Kombination, dadurch gekennzeichnet, daß die erste(n) Lage(n) (11a, 11b) und die zweite Lage (12) mittels eines Gitters aus Polyvinylchlorid (15) im gepreßtem Zustand gehalten werden.

7. Separator nach einem der Ansprüche 1 bis 6, dadurch gekennzeichnet, daß er einen Filter (2) beinhaltet, der in Bewegungsrichtung der Flüssigkeiten vor besagten ersten, zweiten und dritten Lagen (11a), (11b), (12), (13) und besagtem Gewebe (14) angeordnet ist und eine homogene Lage aus Glasfasern (21) aufweist, wobei der Durchmesser dieser Fasern uneinheitlich ist und zwischen 2 und 100 µm liegt.

8. Separator nach Anspruch 7, dadurch gekennzeichnet, daß die Schicht aus Glasfasern (21) des Filters (2) von einem Blatt aus mit Phenolharz imprägniertem Papier (22) überdeckt ist.

9. Separator nach einem der Ansprüche 1 bis 8, dadurch gekennzeichnet, daß er eine Verstärkung in Form eines perforierten Gitters (3) aufweist, die mit Epoxyharz beschichtet ist.

10. Separator nach einem der Ansprüche 1 bis 6, in Kombination mit einem der Ansprüche 7 oder 8 und in Kombination mit dem Anspruch 9, dadurch gekennzeichnet, daß er in Form einer zylindrischen Kartusche vorliegt, die eine rohrförmige Verstärkung (3) aufweist, auf die konzentrisch die ersten, zweiten und dritten Lagen (11a, 11b), (12), (13) und das Gewebe (14), die das koaleszente Mittel bilden, aufgewickelt sind und in deren Innerem der Filter (2) untergebracht ist.

**Claims**

1. Separator for separating water constituting a phase dispersed in the form of droplets in a liquid-hydrocarbon or mixture of hydrocarbons, in particular in a fuel for engines, constituting a continuous phase, this separator comprising a medium adapted to favour coalescence of the dispersed phase and this medium (1) being constituted by the juxtaposition, in the direction of movement of the liquid, of
- one or several first layers (11a, 11b) of a homogenous mixture of fibres of silica and of alumina, the diameter of these fibres being heterogeneous and being between 0.5 and 10 micrometres,
- a second layer (12) of open-cell foam of little or no tendency to wetting by water, of which the pore size is between 0.05 and 0.2 mm,
- a third homogenous layer of glass fibres (13), the diameter of these fibres being heterogeneous and being between 20 and 200 micrometres,
- a mesh of woven cellulosic material (14) of which the pore size is between 2 and 10 mm.

2. Separator according to claim 1 characterised in that the proportion by weight of silica constituting the first layer or layers (11a, 11b) is between 45 and 65 percent of the total weight of the said first layer or layers.

3. Separator according to one of claims 1 or 2 characterized in that the foam forming the second layer (12) is a polyester foam.

4. Separator according to one of claims 1 to 3 characterised in that the first layer or layers of fibres of silica and alumina (11a, 11b) is or are in a compressed state.

5. Separator according to one of claims 1 to 4 characterised in that the foam layer (12) is in a compressed state.

6. Separator according to claims 4 and 5 taken in combination, characterized in that the first layer or layers (11a, 11b) and the second layer (12) are maintained in a compressed state by means of a grid of polyvinyl chloride (15).

7. Separator according to one of claims 1 to 6 characterized in that it comprises a filter (2) which, in the direction of movement of the liquid, is arranged upstream of the said first, second and third layers (11a); (11b), (12), (13), and the said woven layer (14) and comprises a homogenous layer of glass fibres (21), the diameter of these fibres being heterogeneous and being between 2 and 100 micrometres.

8. Separator according to claim 7 characterized in that the layer of glass fibres (21) of the filter (2) is clad in a sheet of paper impregnated with phenolic resin (22).

9. Separator according to one of claims 1 to 8 characterised in that it has a frame in the form of a perforated grid (3) clad in epoxy resin.

10. Separator according to one of claims 1 to 6 taken in combination with one of claims 7 or 8 and taken in combination with claim 9, characterized in that it takes the form of a cylindrical cartridge comprising a tubular frame (3) on to which are rolled concentrically the first, second and third layers (11a, 11b), (12), (13), and the woven layer (14) constituting the coalescing medium and inside which is lodged the filter (2).